# EUROPÄISCHE PATENTANMELDUNG

(11) **EP 1 128 283 A1**
(43) Veröffentlichungstag der Anmeldung: **29.08.2001**
(21) Anmeldenummer: 01250004.7
(22) Anmeldetag: 05.01.2001
(51) Int. Cl.: G06F 17/30, G08G 1/01

(54) **Bildschirmschoner-Strassenkarte**

(30) Priorität: 17.02.2000 DE 10008363
(71) Anmelder: MANNESMANN Aktiengesellschaft, 40213 Düsseldorf (DE)
(72) Erfinder: Schneider, Hans-Günter, 41065 Mönchengladbach (DE); Heimann, Josef, Dipl.-Kfm., Dipl.-Ing., 40629 Düsseldorf (DE)
(74) Vertreter: Meissner, Peter E., Dipl.-Ing.

(57) **Zusammenfassung**

Eine ergonomische und effiziente Bereitstellung von Informationen auf einem Endgerät eines Endgerätnutzers wird ermöglicht durch die Übertragung der Informationen über einen Telekommunikationsnetz-Kanal und Darstellung der Informationen auf einem Endgerät-Display (5) als Bildschirmschoner (6).

## Beschreibung

Die Erfindung betrifft Verfahren und Vorrichtungen zum Bereitstellen von Informationen auf einem Endgerät eines Endgerätnutzers.

Beispielsweise aus der DE 197 06 046 A1 der selben Anmelderin ist ein Verfahren bekannt, Verkehrsinformationen an ein Endgerät zur dortigen Darstellung zu übertragen.

Aufgabe der vorliegenden Erfindung ist die Schaffung eines Verfahrens, welches möglichst effizient und ergonomisch Informationen, insbesondere Verkehrsinformationen, an ein Endgerät zur dortigen optischen Darstellung übermittelt. Die Aufgabe wird durch die unabhängigen Ansprüche gelöst.

Die erfindungsgemäße Übertragung der Informationen zur Darstellung auf einem Display des Endgerätes als Bildschirmschoner ermöglicht eine sehr effiziente Verfolgung von Verkehrsinformationen von einem herkömmlichen PC aus. Dabei ist es beispielsweise möglich, am Ende der Arbeitszeit vor Fahrtantritt unaufwendig noch die Verkehrssituation zu sichten und ggfs. eine geeignete Route für die Heimfahrt zu wählen oder die Heimfahrt im Falle eines Staus zu verschieben.

Zweckmäßig werden die Verkehrsinformaitonen als digitale Karte (z. B. als bitmap) an das Endgerät per Festnetz oder Mobilfunk übermittelt und dort als Bildschirmschoner dargestellt. Vorzugsweise ist für jeden Endgerät-Nutzer mindestens ein Profil in einer die Verkehrsinformationen aussendenden Verkehrsinformationszentrale gespeichert, so dass einem bestimmten Nutzer beispielsweise eine bestimmte digitale Karte mit aktuellen Verkehrshinweisen (Unfälle, Staus, Reisezeiten etc.) übertragen werden. Die Übertragung kann zyklisch oder nur im Falle von (insbesondere durch den Endgerät-nutzer der Verkehrsinformationszentrale vorgegebenen) Änderungen erfolgen. Die digitale Karte ist vorzugsweise mit Hyperlink-Flächen oder Mouseover-Flächen an bestimmten Stellen wie beispielsweise Staus versehen, welche durch Anklicken oder Überfahren mit einer Maus am Bildschirm die Darstellung von Zusatzinformationen am Bildschirm auslösen.

Vorzugsweise ist eine Warnfunktion implementiert, welche am Endgerät einen Hinweis bei einer bestimmten (insbesondere vorgegebenen) Veränderung der Verkehrslage auslöst; die Warnfunktion kann entweder seitens des Endgerätes oder seitens der Verkehrszentrale implementiert sein.

Weitere Merkmale und Vorteile der Erfindung ergeben sich aus den Ansprüchen und der nachfolgenden Beschreibung eines Ausführungsbeispiels anhand der Zeichnung. Dabei zeigt
- Fig. 1: schematisch die Übertragung von Verkehrsinformationen zu einem Endgerät zur dortigen Darstellung und
- Fig. 2: ein Beispiel für eine aus übertragenen Informationen aufgebaute, am Endgerät dargestellte digitale Karte.

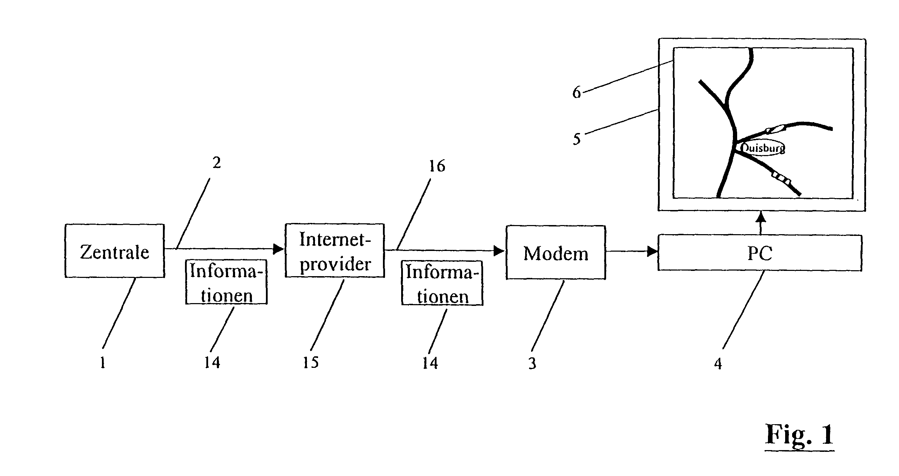

Figur 1 zeigt die Übertragung von Verkehrsinformationen von einer Zentrale 1 per Festnetz 2, 16 bis zum einem endgerätseitigen Modem 3, welches mit einem Endgerät in Form eines PC's 4 verbunden ist, auf dessen Bildschirm 5 als Bildschirmschoner eine digitale Karte 6 aufgrund übertragender Informationen dargestellt wird.

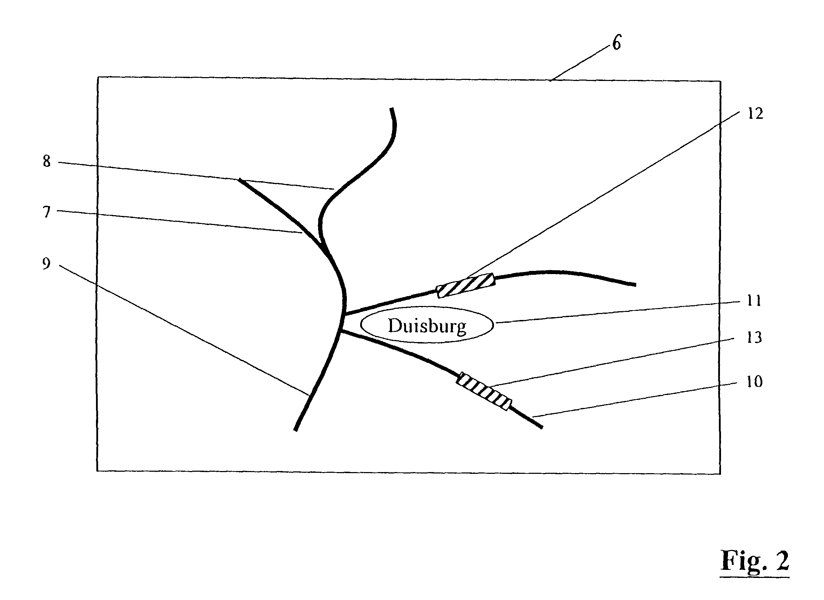

Figur 2 zeigt ein Beispiel für eine digitale Karte 6, in welcher für einen Ausschnitt eines Straßenverkehrsnetzes Straßen 7, 8, 9, 10, Orte 11 und Staus 12, 13 dargestellt werden. Die Informationen 14, welche hier zumindest die digitale Karte und ggfs. Zusatzinformationen (wie z. B. Textinformationen zu Staus in der digitalen Karte, Hyperlinks etc.) enthalten, können per Festnetz oder Mobilfunknetz übertragen werden. Sie können insbesondere an ein Endgerät 4, welches über ein Modem etc. 3 im Internet über einen Serviceprovider 15 eingelogt ist, über das Internet übertragen werden. Insbesondere kann die Zentrale 1 eine eigene Homepage im Internet besitzen. Die Informationen 14 können vom Internetserviceprovider 15 an das Modem insbesondere per Festnetz oder Mobilfunk übertragen werden. Geeignete Übertragungsprotokolle sind beispielsweise http, xtp, wtp (in html, xml, wml), fttp-Protokolle, Kurznachrichten (bei Mobilfunk), isdn-d Kanal-Übertragung (Festnetz usw.).

Die Informationen (z. B. die Karte. 6 in Figur 2) können zyklisch oder bei Änderung der Informationen übertragen werden. Beispielsweise kann die Karte übertragen werden, wenn ein Stau 12, 13 hinzukommt, sich verändert oder wegfällt, sich Reisezeiten oder Geschwindigkeiten ändern etc., insbesondere auf einer vom Endgerätnutzer vorgegebenen, beispielsweise in der Zentrale gespeicherten Route durch das Straßenverkehrsnetz 7 bis 10.

In der digitalen Straßenkarte gemäß Figur 2 kann beispielsweise hinter Staus 12, 13 ein Hyperlink hinterlegt sein, bei dessen Überfahren mit der Mouse oder durch Anklicken eine Homepage adressiert wird, in welcher Zusatzinformationen (wie Reisezeiten, Dauer, Ursache) zum Stau dem Endgerätnutzer angezeigt werden. Auch ist es möglich, die Zusatzinformationen bereits mit den Daten 14 zur digitalen Karte 6 von der Zentrale an das Endgerät oder vom Internetprovider 15 an das Endgerät zu übertragen und die Darstellungen bestimmter Informationen wie beispielsweise Staus 12, 13 mit einer Mouseover-Funktion zu hinterlegen, so dass beispielsweise bei dem Überfahren eines Staus 12 mit einer Mouse (also einem Mousecursor auf dem Bildschirm) Zusatzinformationen zu diesen Informationen (hier zum Stau 12) angezeigt oder akustisch ausgegeben werden. Für jeden Endgerätnutzer eines Endgerätes 4 kann in einer Zentrale oder einem Internetprovider 15 ein Profil hinterlegt sein. Das Profil kann insbesondere angeben, welche Informationen dem Endgerätnutzer und unter welchen Bedingungen diese ihm übertragen werden sollen. Beispielsweise kann der Ausschnitt einer digitalen Straßenkarte, die zu übertragen ist und/oder die Bedingungen für eine Neuübertragung der digitalen Straßenkarte (beispielsweise neuer Stau auf einer bestimmten Straße 8) gespeichert sein. Überdies ist zweckmäßig im Endgerät 4 oder in der Zentrale 1 oder beim Internetprovider 15 angegeben, in welcher Art eine automatische Abrechnung erfolgen soll. Insbesondere kann eine Bezahlung über eine flat-rate, also für einen pauschalen Internetzugang erfolgen. Alternativ ist eine automatische Abrechnung für jede Übertragung von bereitzustellenden Informationen möglich.

## Patentansprüche

1. Verfahren zum Bereitstellen (2, 6) von Informationen (14, 6) auf einem Endgerät (4, 5) eines Endgerätnutzers,
wobei die Informationen (14, 6) über einen Kanal eines Telekommunikationsnetzes (2, 16) zum Endgerät (4,5) übertragen werden und
die Informationen (14, 6) seitens des Endgerätes (4, 5) auf einem Display (5) als Bildschirmschoner (6) dargestellt werden.

2. Verfahren nach Anspruch 1,
dadurch gekennzeichnet,
dass die Informationen 14,6 von einer Informationszentrale (1) an das Endgerät (4, 5) übertragen werden.

3. Verfahren nach einem der vorhergehenden Ansprüche,
dadurch gekennzeichnet,
dass die Informationen (14, 6) Verkehrsinformationen enthalten.

4. Verfahren nach einem der vorhergehenden Ansprüche,
dadurch gekennzeichnet,
dass die Informationen (14, 6) Hinweise auf Veranstaltungen, points of interest, Ticketangebote, Auktionen mit Ortsangaben oder dergleichen enthalten.

5. Verfahren nach einem der vorhergehenden Ansprüche,
dadurch gekennzeichnet,
dass die Informationen (14, 6) eine digitale Straßenkarte (6) oder einen Ausschnitt aus einer digitalen Straßenkarte enthalten.

6. Verfahren nach einem der vorhergehenden Ansprüche,
dadurch gekennzeichnet,
dass die digitale Karte (6) als bitmap übermittelt wird.

7. Verfahren nach einem der vorhergehenden Ansprüche,
dadurch gekennzeichnet,
dass in der digitalen Karte (6) Reisezeiten oder Geschwindigkeiten repräsentierende Markierungen und/oder Text enthalten sind.

8. Verfahren nach einem der vorhergehenden Ansprüche,
dadurch gekennzeichnet,
dass die digitale Karte (6) optisch hervorgehobe Markierungen von Staus enthält.

9. Verfahren nach Anspruch 8,
dadurch gekennzeichnet,
dass die Staumarkierungen mit Hyperlinks zu Internetseiten hinterlegt sind.

10. Verfahren nach einem der Ansprüche 8 oder 9,
dadurch gekennzeichnet,
dass beim Überfahren oder Anklicken von Stau-Markierungen in einer digitalen Karte (6) durch den Cursor einer Mouse Zusatzinformationen zu Staus,
insbesondere Länge und/oder Intensität und/oder Dauer und/oder Grund optisch oder akustisch dargestellt werden.

11. Verfahren nach einem der vorhergehenden Ansprüche,
dadurch gekennzeichnet,
dass Zusatzinformationen mit den die digitale Karte repräsentierenden Informationen zum Endgerät übertragen werden.

12. Verfahren nach einem der vorhergehenden Ansprüche,
dadurch gekennzeichnet,
dass bei Änderungen, insbesondere vorgegebenen Änderungen auf Routen der digitalen Straßen-Karte eine Warnung an den Endgerätnutzer ausgegeben oder der Bildschirmschoner eingeschaltet wird.

13. Verfahren nach einem der vorhergehenden Ansprüche,
dadurch gekennzeichnet,
dass die Übertragung der Information zum Endgerät per Internet erfolgt.

14. Verfahren nach einem der vorhergehenden Ansprüche,
dadurch gekennzeichnet,
dass die Übertragung der Informationen per Mobilfunk erfolgt.

15. Verfahren nach Anspruch 14,
dadurch gekennzeichnet,
dass die Übertragung durch Point to Point-Kurznachrichten erfolgt.

16. Verfahren nach einem der Ansprüche 1 bis 13,
dadurch gekennzeichnet,
dass die Übertragung der Informationen über Festnetz erfolgt.

17. Verfahren nach Anspruch 16,
dadurch gekennzeichnet,
dass die Übertragung der Informationen über einen isdn-d-Kanal erfolgt.

18. Verfahren nach einem der vorhergehenden Ansprüche,
dadurch gekennzeichent,
dass die Übertragungskosten für die Übertragung der Information zum Endgerät (3, 4, 5) pauschal abgerechnet werden über eine flat-rate.

19. Verfahren nach einem der vorhergehenden Ansprüche,
dadurch gekennzeichnet,
dass für jede Übertragung der Informationen die Übertragungskosten einzeln berechnet werden.

20. Verfahren nach einem der vorgehenden Ansprüche,
dadurch gekennzeichnet,
dass die Informationen nur bei Änderungen, insbesondere vorgegebenen Änderungen auf einer Route in einer digitalen Karte (6) an das Endgerät (4, 5) übertragen werden.

21. Verfahren nach einem der vorgehenden Ansprüche,
dadurch gekennzeichnet,
dass die Informationen (14) zyklisch übertragen werden.

22. Verfahren nach einem der vorhergehenden Ansprüche,
dadurch gekennzeichent,
dass in einer Zentrale (1), von der Informationen (14) an das Endgerät (3, 4, 5) gesendet (2, 15, 16) werden, mindestens eine Datei gespeichert ist, in der bezüglich mindestens eines Endgerätnutzers angegeben ist, welcher Kartenausschnitt einer digitalen Karte ihm übertragen werden soll.

23. Zentrale (1) zum Durchführen des Verfahrens nach einem der vorhergehenden Ansprüche.

24. Zentrale (1), insbesondere nach Anspruch 23, mit
- einer Übertragungseinrichtung (15) zum Übertragen von Informationen (14) an ein Endgerät (3, 4, 5),
- wobei die an das Endgerät (4, 5) übersandten Informationen zur Darstellung als Bildschirmschoner vorgesehen sind.

25. Zentrale nach Anspruch 23 oder 24,
dadurch gekennzeichnet,
dass sie einen Speicher aufweist für Daten, welche angeben, welche Informationen, insbesondere welche Kartenausschnitte einer digitalen Karte, einem Endgerätnutzer zur Darstellung als Bildschirmschoner auf dessen Endgerät übertragen werden sollen.

26. Endgerät zur Durchführung des Verfahren nach einem der vorhergehenden Ansprüche.

27. Endgerät insbesondere nach Anspruch 26,
- mit einer Empfangseinrichtung (3) zum Empfangen von von einer Zentrale (15) gesendeten, als Bildschirnschoner darzustellenden Informationen (14),
- mit einer Steuereinrichtung (4), die so ausgebildet ist, dass die Informationen auf dem Display (6) des Endgerätes als Bildschirmschoner dargestellt werden.
